# EUROPÄISCHE PATENTSCHRIFT

(11) **EP 2 673 862 B1**
(45) Veröffentlichungstag und Bekanntmachung des Hinweises auf die Patenterteilung: **20.05.2015**
(21) Anmeldenummer: 11801668.2
(22) Anmeldetag: 08.12.2011
(51) Int. Cl.: G07F 15/00, H02J 7/00, B60L 11/18

(54) **LADESTATION UND VERFAHREN ZUR SICHERUNG EINES LADEVORGANGS EINES ELEKTROFAHRZEUGS**
CHARGING STATION AND METHOD FOR SECURING THE CHARGING PROCESS OF AN ELECTRIC VEHICLE
STATION DE CHARGE ET METHODE POUR SECURISER LE PROCESSUS DE CHARGE D'UN VEHICULE ELECTRIQUE

(30) Priorität: 09.02.2011 DE 102011010809
(43) Veröffentlichungstag der Anmeldung: 18.12.2013
(73) Patentinhaber: RWE AG, 45128 Essen (DE)
(72) Erfinder: BECKER, Gernot, 44269 Dortmund (DE)
(74) Vertreter: Cohausz & Florack
(86) Internationale Anmeldenummer: PCT/EP2011/072215
(87) Internationale Veröffentlichungsnummer: WO 2012/107132

(56) Entgegenhaltungen:
- WO-A1-2010/115927
- WO-A2-2010/100081
- DE-A1-102009 030 092
- DE-A1-102010 011 162
- US-A1- 2005 104 555
- US-A1- 2010 013 433

## Beschreibung

Der Gegenstand betrifft eine Ladestation sowie ein Verfahren zur Sicherung eines Ladevorgangs eines Fahrzeugs, insbesondere eines Elektrofahrzeugs, an einer Ladestation.

Die Verwendung von Elektrofahrzeugen verspricht eine Lösung vieler aktueller Probleme des Individualverkehrs: der für ihren Antrieb benötigte Strom kann auf umweltfreundliche Weise hergestellt werden, es entstehen keine Abgase am Fahrzeug selbst, die Lärmbelastung wird reduziert und der Elektroantrieb selbst ermöglicht prinzipbedingt einen höheren Wirkungsgrad als ein Motor, welcher auf der Verbrennung fossiler Brennstoffe beruht.

Zum breiten Masseneinsatz von Elektrofahrzeugen muss aber auch eine einfache und flächendeckende Möglichkeit der Energieaufladung geschaffen werden, analog zum bekannten Tankstellennetz für flüssigen Kraftstoff. Hierzu müssen auch Fragen der Abrechnung eines Entgelts sowie Sicherung des Ladevorgangs beantwortet werden. Augenblicklich ist zwar zumindest flächendeckend die Infrastruktur für eine Stromversorgung vorhanden, der Energieverbrauch an einer Steckdose etwa kann aber nicht ohne Weiteres nach dem jeweiligen Verbraucher aufgeschlüsselt und zeitnah ermittelt, ggf. begrenzt und auf der Stelle fakturiert werden.

Um von jedermann nutzbare Stromtankstellen, also öffentlich nutzbare Ladestationen, praktikabel zu machen, müssen diese aber auch so einfach zu bedienen sein wie Zapfsäulen für flüssige Kraftstoffe und auch eine analog mögliche Begrenzung und Abrechnung des Aufladens ermöglichen. Aus Sicht des Fahrzeugnutzers soll sich also möglichst wenig ändern.

Bei bekannten Schutzmechanismen, die ein Abziehen des Steckers verhindern sollen, erfolgt die Steuerung des mechanischen Verriegelns vom Fahrzeug aus. Ferner überwacht die Ladestation, ob der Stecker in das Fahrzeug gesteckt ist. Beim Abziehen des Steckers erfolgt eine Unterbrechung des Ladestroms, so dass keine Gefahr von dem Ladestecker durch das dort anliegende hohe elektrische Potenzial ausgeht.

Das kann aber dazu führen, dass ein mutwilliges Abziehen des Ladesteckers vom Fahrzeug zu einer Unterbrechung des Ladevorgangs führt. Insbesondere für den Fall, dass der Ladevorgang vom Nutzer im Vorfeld des Ladens bereits bezahlt wurde, sollte dies verhindert werden. In diesem Fall wünscht der Benutzer auch, dass das Fahrzeug für die bezahlte Dauer an der Ladestation auflädt. Dies ist gerade dann relevant, wenn das Laden mit Gleichstrom erfolgt. Es gibt noch kein geeichtes Verfahren, bei dem beim Laden mit Gleichstrom die bezogene Energiemenge gemessen wird. Vielmehr wird beim Laden mit Gleichstrom eine Ladedauer gemessen. Daher muss sichergestellt sein, dass die im Vorhinein bezahlte Ladedauer auch tatsächlich dazu genutzt wird, das Fahrzeug aufzuladen.

Aus der MO 2010/115927 A1, eine Anmeldung der Anmelderin, ist eine Ladekabelverriegelungsvorrichtung bekannt. Diese Ladekabelverriegelungsvorrichtung ist mit der Zentralverriegelung des Fahrzeugs gekoppelt und ermöglicht ein verriegeln und entriegeln des Ladekabels abhängig von Verschluss des Fahrzeugs selbst.

Die US 2005/0104555A1 beschreibt eine Möglichkeit, ein Mobiltelefon an einer öffentlichen Ladestation zu laden. Um nach dem Ladevorgang das Gerät aus der Ladestation entfernen zu können, wird vorgeschlagen, einen Code vom Nutzer abzufragen.

Die WO 2010/100081 A2, eine Anmeldung der Anmelderin, betrifft ein Verfahren zum Bestimmen einer Ladedauer für das Laden eines Elektrofahrzeugs. Ein Nutzer kann, abhängig von der benötigten Energie und der gewünschten Ladedauer ein Leistungsangebot aus einer Mehrzahl von Leistungsangeboten auswählen. Entsprechend der Auswahl wird dann ein Ladevorgang durchgeführt.

Nachteilig bei dem bekannten Stand der Technik ist jedoch, dass die Bediensicherheit stets auf Kosten der Verfügbarkeit der Ladestation ermöglicht wird.

Aus den genannten Gründen lag dem Gegenstand die Aufgabe zu Grunde, ein Verfahren zum Laden eines Fahrzeugs zur Verfügung zu stellern, welches eine ladestationsseitige Absicherung des Ladevorgangs bei gleichzeitig hoher Verfügbarkeit der Ladestation beinhaltet.

Diese Aufgabe wird gemäß einem ersten Aspekt durch ein Verfahren nach Anspruch 1 gelöst.

Es wird ladestationsseitig ein zufälliger oder pseudozufälliger erster Freischaltcode an den Benutzer ausgegeben. Der erste Freischaltcode kann eine Ziffernfolge oder eine Zeichenfolge oder ein sonstiger Code sein. Pseudozufällig ist ein Freischaltcode, wenn dieser nicht nach einem bestimmten Muster erzeugt wird, sondern für einen potentiellen Angreifer im Vorhinein nicht vorhersagbar ist. Dies kann beispielsweise auch ein Code aus einem Ringspeicher sein. Auch ist es möglich, dass der erste Freischaltcode mit einem Zufallsgenerator erzeugt wird.

Nachdem der erste Freischaltcode ausgegeben wurde, kann ladestationsseitig der Ladestrom freigegeben werden. Vorzugsweise wird vor dem Freigeben des Ladestroms noch überprüft, ob ein Ladekabel in das Fahrzeug korrekt eingesteckt ist. Dies ist notwendig, wenn sichergestellt werden soll, dass von dem Ladekabel keine Gefahr für einen Nutzer ausgeht. Nachdem der Ladestrom freigegeben wurde, erfolgt der Ladevorgang. Dieser ist bestimmt durch eine Dauer, die der Nutzer im Vorhinein bestimmt und bezahlt. Dies gilt insbesondere für einen Ladevorgang mit Gleichstrom.

Während des Ladevorgangs oder zum Ablauf der vorbezahlten Dauer des Ladevorgangs möchte der Nutzer das Ladekabel vom Fahrzeug abziehen können. Aus diesem Grund wird ein von dem Benutzer eingegebener zweiter Freischaltcode ladestationsseitig empfangen. Vorzugsweise hat der Nutzer sich den ersten Freischaltcode, der zuvor ausgegeben wurde, gemerkt oder dieser wurde ihm von der Ladestation ausgedruckt. Dann kann der Nutzer den zweiten Freischaltcode, der identisch mit dem ersten Freischaltcode ist, eingeben.

Um zu überprüfen, ob der zweite Freischaltcode dem ersten Freischaltcode entspricht, wird ladestationsseitig der erste Freischaltcode mit dem zweiten Freischaltcode verglichen. Hierzu ist es notwendig, dass der ladestationsseitig ausgegebene erste Freischaltcode in der Ladestation gespeichert wird. Dies ist vorzugsweise ein gegenüber unbefugtem Zugriff gesichertes Speichern. Hierbei kann der erste Freischaltcode beispielsweise codiert in der Ladestation gespeichert werden. Der Vergleich erfolgt dahingehend, dass überprüft wird, ob der erste Freischaltcode mit dem eingegebenen zweiten Freischaltcode identisch ist.

Sind die beiden Freischaltcodes identisch, wird ladestationsseitig der Ladestrom unterbrochen. Dann kann der Ladevorgang beendet werden.

Durch das Eingeben des zweiten Freischaltcodes und das Vergleichen des zweiten Freischaltcodes mit dem ausgegebenen ersten Freischaltcode wird sichergestellt, dass nur derjenige den Ladevorgang unterbrechen kann, der den Ladevorgang ausgelöst hat. Nur diesem Benutzer wurde der erste Freischaltcode bekannt gegeben.

Vor dem Schritt des ladestationsseitigen Freigebens des Ladestroms wird ein eine Verriegelung eines Ladekabels an dem Fahrzeug bewirkendes Verriegelungssignal an das Fahrzeug übermittelt.

Dies kann drahtlos, beispielsweise über W-lan, Bluetooth, ZigBee, Infrarot, Near Field Communication oder dergleichen erfolgen. Auch ist es möglich, dass die Kommunikation über das Ladekabel selbst erfolgt. Hierbei ist es beispielsweise möglich, dass das Ladekabel neben den Adern, die für die Energieübertragung notwendig sind, weitere Adern aufweist, die zur Kommunikation benutzt werden. Beispielsweise können dies acht Adern sein, mit dem eine Kommunikation mit dem CAN-Bus des Fahrzeugs erfolgen kann. Auch ist es möglich, dass die Kommunikation über den Energieleiter erfolgt. Hierbei kann vorzugsweise sein Power-Line-Communication (PLC) Protokoll zum Einsatz kommen.

Auch wird vorgeschlagen, dass ladestationsseitig überprüft wird, ob das Fahrzeug auf das Verriegelungssignal korrekt anspricht und das Ladekabel tatsächlich verriegelt hat. Dies kann dadurch erfolgen, dass das Fahrzeug an die Ladestation ein Bestätigungssignal übermittelt, dass das Ladekabel in dem Fahrzeug verriegelt würde. Der Empfang dieses Bestätigungssignals kann in der Ladestation überwacht werden. Erst wenn das Signal empfangen wurde, erfolgt die Freigabe des Ladestroms.

Nachdem der Ladevorgang beendet wurde, das heißt nachdem der korrekte zweite Freischaltcode eingegeben wurde und der Ladestrom unterbrochen wurde, muss das Ladekabel an dem Fahrzeug entriegelt werden. Aus diesem Grund wird nach dem Schritt des Unterbrechens des Ladestroms ein Entriegelungssignal von der Ladestation an das Fahrzeug übermittelt. Auch dies kann in der gleichen Weise an das Fahrzeug übermittelt werden, wie das Verriegelungssignal. Im Anschluss kann ladestatiotionsseitig überprüft werden, ob das Fahrzeug tatsächlich das Ladekabel entriegelt hat.

Wie bereits eingangs erwähnt, wird vor Schritt a) ladestationsseitig eine Ladedauer bestimmt. Dies ist insbesondere beim Laden mit Gleichstrom der Fall. Beim Gleichstromladen kann beispielsweise mit einer Ladespannung von 400 Volt und einem Ladestrom von 170 Ampere geladen werden. In diesem Fall kann beispielsweise innerhalb von 30 Minuten eine 80%-ige Ladung der Batterie erfolgen. Beim Gleichstromladen muss die Laderegelung von der Ladesäule aus erfolgen. Daher muss auch die Ladesäule dafür verantwortlich sein, wann der Ladevorgang beendet wird.

Insbesondere beim Laden abhängig von einer Ladedauer ist ein Bezahlten im Vorhinein erwünscht. Daher wird auch vor dem Schritt a) ladestettionsseitig ein Bezahlvorgang abgewickelt. Beispielsweise kann ein Benutzer eine Ladedauer angeben und die erforderlichen Kosten unmittelbar an der Ladestation bezahlen. Dies kann beispielsweise durch eine Zahlung mit einer Kreditkarte oder einer EC-Karte erfolgen. In diesem Fall muss ein Benutzer häufig einen PIN-Code eingeben, um die Zahlung freizugeben. Daher weist die Ladestation in diesem Fall bereits ein Display und ein PIN Pad auf. Über dieses Display kann beispielsweise der erste Freischaltcode ausgegeben werden. Andere Ausgaben sind jedoch auch möglich. Über das PIN Pad, welches auch für den Bezahlvorgang benutzt wird, kann auch die Eingabe des zweiten Freigabecodes erfolgen.

Auch wird vorgeschlagen, dass die Schritte a) bis b) zu Beginn eines Ladevorgangs durchgeführt werden. Das heißt, dass der Ladevorgang zumindest durch die Schritte a) bis b) initiiert wird.

Zum Ende des Ladevorgangs werden vorzugsweise die Schritte c) bis fl) durchgeführt. Somit kann ein Ladevorgang durch zumindest das Ausführen der Schritte c) bis fl) beendet werden.

Wie zuvor bereits erläutert, kann ein Bezahlen des Ladevorgangs im Vorhinein erfolgen. Dies kann beispielsweise durch ein Zahlen mit einer Kreditkarte oder mit einer EC-Karte erfolgen. In diesem Fall ist es häufig vorteilhaft, wenn dem Benutzer ein Zahlungsbeleg, auch aus steuerrechtlichen Gesichtspunkten, ausgegeben wird. Aus diesem Grund hat die Ladestation häufig einen Belegdrucker. Der Belegdrucker kann vorteilhafter Weise auch dazu genutzt werden, den ersten Freischaltcode auszugeben. Auch kann eine Ausgabe auf einem Display, beispielsweise dem Display, welches auch für die Zahlung genutzt wird, erfolgen. Schließlich ist es möglich, den Nutzer mittels einer elektronischen Nachricht über den Freischaltcode zu informieren. Beispielsweise ist es möglich, dass der Benutzer seine Mobilfunknummer angibt und der erste Freischaltcode als Kurznachricht an sein Mobiltelefon übermittelt wird. Auch kann eine E-Mail genutzt werden, um dem Nutzer den ersten Freischaltcode zu übermitteln.

Sobald der Nutzer des Fahrzeugs den Ladevorgang unterbrechen möchte, muss dieser den zweiten Freischaltcode eingeben. Es wird vorgeschlagen, dass der zweite Freischaltcode ladestationsseitig oder fahrzeugseitig vom Benutzer eingegeben wird. Bei einer ladestationsseitigen Eingabe kann das PIN Pad, welches zuvor bereits erwähnt wurde, genutzt werden. Auch ist es möglich, dass mittels einer Kurznachricht über ein Mobilfunknetz der zweite Freischaltcode an die Ladestation übermittelt wird. In diesem Fall kann an der Ladestation beispielsweise eine Mobilfunknummer oder eine andere Telefonnummer angegeben sein, an die der Benutzer eine Kurznachricht schicken kann. Auch ist es möglich, dass mittels eines Apps eine Übermittlung des zweiten Freischaltcodes an die Ladestation erfolgen kann.

Beim fahrzeugseitigen Eingeben kann der Benutzer beispielsweise eine in einem Fahrzeug verbaute Tastatur benutzen. Auch wäre beispielsweise eine Spracheingabe fahrzeugseitig möglich. Hierzu könnte beispielsweise die Spracherkennungsvorrichtung des fahrzeugseitig integrierten Telefons genutzt werden. Diese Vorrichtung ist bereits geeignet, Spracheingaben von Ziffern zu erkennen. Somit könnte hierüber beispielsweise auch der zweite Freischaltcode fahrzeugseitig eingegeben werden.

Die Kommunikation der Verriegelungs- und/oder Entriegelungssignale als auch die Kommunikation von Ladeparametern und die Lageregelung selbst benötigt eine Kommunikationsverbindung sowie ein Kommunikationsprotokoll zwischen Ladestation und Fahrzeug. Aus diesem Grund wird vorgeschlagen, dass zwischen der Ladestation und dem Fahrzeug über das Ladekabel, vorzugsweise unter Verwendung eines CHADEMO-Protokolls, kommuniziert wird. Das CHADEMO-Protokoll dient zur Ladesteuerung und kann auch zur Kommunikation von Ver- und Entriegelungssignalen genutzt werden. Auch kann die Kommunikation zwischen Ladestation und Fahrzeug über PLC erfolgen. Es kann eine Kommunikation über die Energieleitung erfolgen. Insbesondere kann die Kommunikation über die DC Leitung erfolgen.

Spätestens zum Ende eines Ladevorgangs sollte die Ladestation von anderen Nutzern genutzt werden können. Um zu verhindern, dass ein Benutzer eine Ladestation blockiert, obwohl diese nicht mehr sein Fahrzeug lädt, wird nach Ablauf der Ladedauer, unabhängig von der Eingabe des zweiten Freigabecodes, das Ladekabel fahrzeugseitig entriegelt. Hierzu kann beispielsweise die Ladestation das Entriegelungssignal nach Ablauf der bezahlten Ladedauer an das Fahrzeug senden, woraufhin das Fahrzeug das Ladekabel entriegelt. Das entriegelte Ladekabel kann beispielsweise durch eine optische Anzeige Dritten signalisiert werden. Hierdurch wird sichergestellt, dass die Ladestation auch dann genutzt werden kann, wenn ein vorheriger Benutzer das Ladekabel nicht durch Eingabe des zweiten Freischaltcodes freigegeben hat, obwohl die Ladedauer abgelaufen ist.

Wie eingangs bereits erläutert, kann der erste Freischaltcode in der Ladestation erzeugt werden. Dies kann beispielsweise durch Auslesen aus einem Ringspeicher oder durch einen Zufallsgenerator erfolgen. Andererseits ist es auch möglich, dass in der Ladestation von einer Zentrale der erste Freischaltcode empfangen wird. Hierzu kann beispielsweise die Ladestation ein Anforderungssignal an die Zentrale übermitteln, woraufhin in der Zentrale ein Freischaltcode ermittelt, errechnet oder ausgelesen wird, und anschließend an die Ladestation übertragen wird. Die Übertragung kann dabei beispielsweise verschlüsselt erfolgen. Eine Übertragung mittels Powerline-Communication ist ebenfalls möglich. Andererseits sind andere Übertragungswege wie beispielsweise über GSM, UMTS, W-lan, EDGE, WI-FI oder dergleichen möglich. Schließlich sind auch kabelgebundene Übertragungen, wie z. B. über DSL und/oder unter Verwendung des Internetprotokolls möglich.

Ein weiterer Gegenstand ist eine Ladestation nach Anspruch 7.

Hierbei weist die Ladestation Ausgabemittel eingerichtet zum Ausgeben eines zufälligen oder pseudozufälligen ersten Freischaltcodes an einen Benutzer auf. Die Ausgabemittel können ein Display, ein Belegdrucker oder dergleichen sein. Auch können die Ausgabemittel mit Kommunikationsmitteln verbunden sein, die ein Übertragen des ersten Freischaltcodes an ein Telefon oder ein E-Mail-Konto eines Nutzens ermöglichen. Dann kann der erste Freischaltcode elektronisch an den Benutzer übertragen werden.

Die Ladestation weist darüber hinaus Steuerungsmittel, eingerichtet zum Freigeben des Ladestroms, auf. Die Steuerungsmittel können beispielsweise über das Ladekabel, oder über Funk mit dem Fahrzeug kommunizieren. Die Steuerungsmittel sind vorzugsweise eingerichtet, um über das CHADEMO-Protokoll zu kommunizieren. Die Steuerungsmittel sind ferner dazu eingerichtet, die Verbindung des Ladekabel mit einem Laderegler und dem Versorgungsnetz freizugeben oder zu sperren. Somit kann mittels der Steuerungsmittel der Ladestrom freigegeben oder gesperrt werden. Die Steuerungsmittel können durch einen geeignet programmierten Mikrocomputer gebildet sein.

Die Ladestation weist darüber hinaus Empfangsmittel, eingerichtet zum Empfangen eines von einem Benutzer eingegebenen zweiten Freischaltcodes auf. Die Empfangsmittel können beispielsweise aus einem Ziffernpad/Zeichenpad oder einem PEIN Pad bestehen, über das der Benutzer einen Zifferncode/Zeichencode manuell eingeben kann. Auch können die Empfangsmittel mit den Kommunikationsmitteln verbunden sein, um eine Kurznachricht von dem Benutzer zu empfangen, in der der Benutzer den zweiten Freischaltcode angibt. Auch können Spracherkennungsmittel vorgesehen sein, die es erlauben, dass der Benutzer entweder unmittelbar an der Ladestation oder über sein Telefon den zweiten Freischaltcode mit seiner Sprache eingibt.

Vergleichsmittel können vorgesehen sein, die den ersten Freischaltcode mit dem eingegebenen zweiten Freischaltcode vergleichen. Dies kann ein Mikroprozessor sein, der einen Vergleich von zwei Ziffernfolgen oder Zeichenfolge ermöglicht. Hierzu kann in der Ladestation ein Speicher vorgesehen sein, der den ausgegebenen ersten Freischaltcode zwischenspeichert, bis ein Vergleich mit dem zweiten Freischaltcode erfolgt.

Schließlich sind die Vergleichsmittel in Wirkverbindung mit den Steuerungsmitteln. Diese Wirkverbindung dient zumindest dazu, dass bei einem positiven Vergleichsergebnis die Steuerungsmittel den Ladestrom unterbrechen. Hierzu kann eine Unterbrechung des Lagereglers und des Ladekabels von dem Energieversorgungsnetz erfolgen.

Neben den genannten Mitteln kann die Ladestation ferner noch Kommunikationsmittel zur Kommunikation mit dem Fahrzeug aufweisen. Insbesondere zur Übertragung eines Verriegelungs- und eines Entriegelungssignals und zum Überprüfen der Verriegelung des Ladekabels an dem Fahrzeug können die Kommunikationsmittel vorgesehen sein. Die Kommunikationsmittel können auch in Wirkverbindung mit den Steuerungsmitteln stehen und somit ermöglichen die Kommunikationsmittel auch eine Kommunikation mit dem Fahrzeug, z.B. über das CHADEMO-Protokoll oder ein PLC Protokoll oder ein sonstiges Protokoll mit welchem über einen Energieleiter oder auch einen Pilotleiter kommuniziert werden kann.

Das zuvor genannte Verfahren kann auch als Computerprogramm oder als auf einem Speichermedium gespeichertes Computerprogramm realisiert werden. Hierbei kann ladestationsseitig ein Mikroprozessor zur Durchführung der jeweiligen Verfahrensschritte durch ein Computerprogramm geeignet programmiert sein.

Nachfolgend wird der Gegenstand anhand einer Ausführungsbeispiele zeigender Zeichnung erläutert. In der Zeichnung zeigen:
- Fig. 1: eine schematische Ansicht einer Ladestation gemäß eines Ausführungsbeispiels;
- Fig. 2: eine schematische Ansicht einer Einrichtung zum Eingeben eines Freischaltcodes und zum Ausgeben eines Freischaltcodes;
- Fig. 3: eine schematische Ansicht eines Systems mit einer Ladestation, einem Fahrzeug und einer Zentrale;
- Fig. 4: eine Detailansicht einer fahrzeugseitigen Verriegelungseinrichtung.

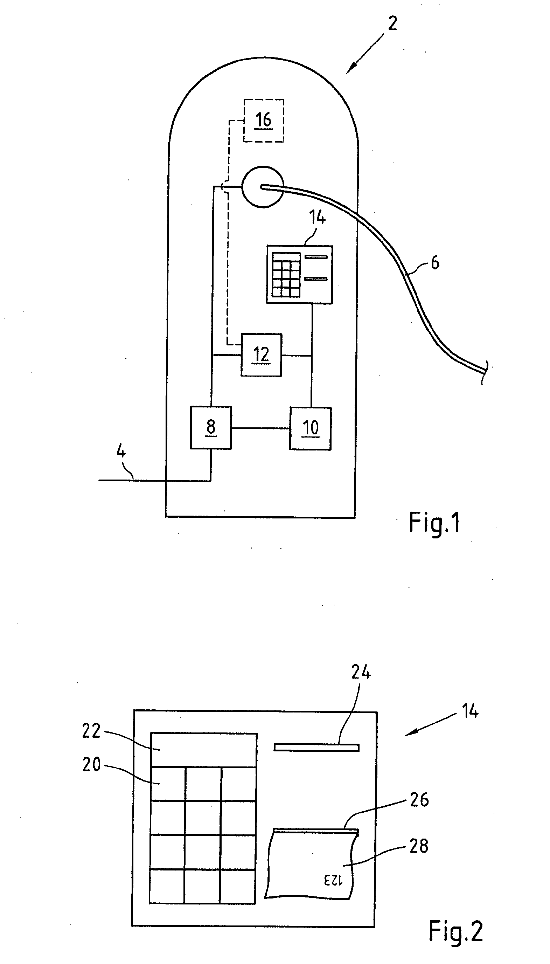

Figur 1 zeigt eine Ladestation 2. Die Ladestation 2 ist mit einem Energieversorgungsnetz 4 verbunden. Ein an der Ladestation 2 angeordnetes Ladekabel 6 kann über einen Lageregler 8 mit dem Energieversorgungsnetz 4 verbunden werden. Der Laderegler 8 wird über ein Steuerungsmittel 10 gesteuert und kann insbesondere von dem Steuerungsmittel 10 zum Freigeben und Unterbrechen des Ladestroms angesteuert werden.

Darüber hinaus ist in der Ladestation 2 ein Mikroprozessor 12 vorgesehen, der einerseits über Kommunikationsmittel verfügt, um über das Ladekabel 6 mit dem Fahrzeug zu kommunizieren und andererseits die Kommunikation zwischen den Steuerungsmitteln 10 und einem Ein-/Ausgabeterminal 14 steuert.

Schließlich kann mit dem Steuerungsmittel 12 ein Kommunikationsmittel 16 verbunden sein. Das Kommunikationsmittel 16 kann zum Einen über eine Kommunikationsschaltung, wie beispielsweise einen Funkchip, z. B. über Nahfunk, eine drahtlose Kommunkation mit den Fahrzeug aufnehmen. Außerdem kann das Kommunikationsmittel 16 dazu eingerichtet sein, drahtgebunden oder drahtlos mit einer Zentrale, beispielsweise über DSL oder über GSM/UMTS/EDGE/LTE zu kommunizieren.

Das Ein-/Ausgabeterminal 14 ist in Figur 2 näher dargestellt. Wie zu erkennen ist, verfügt das Ein-/Ausgabeterminal 14 über ein PIN Pad 20. Über dieses PIN Pad 20 kann ein Benutzer Zahlen und/oder Zeichen eingeben. Darüber hinaus ist ein Display 22 vorgesehen, über das der Benutzer seine Eingaben überprüfen kann und über das dem Benutzer Eingabeaufforderungen und sonstige Hinweise gegeben werden können.

Das Ein-/Ausgabeterminal 14 verfügt über einen Kartenleser 24, mit dem beispielsweise eine EC-Karte oder eine Kreditkarte gelesen werden kann. Ein nicht dargestellter Mikroprozessor in dem Ein-/Ausgabetarminal 14 erlaubt es somit, einen Bezahlvorgang mit einer Kreditkarte oder einer EC-Karte zu steuern.

Schließlich weist das Ein-/Ausgabeterminal 14 einen Belegdrucker 26 auf. Der Belegdrucker 26 kann zum Einen einen Zahlbeleg ausdrucken und zum Anderen einen zweiten Freischaltcode auf einem Beleg 28 ausdrucken.

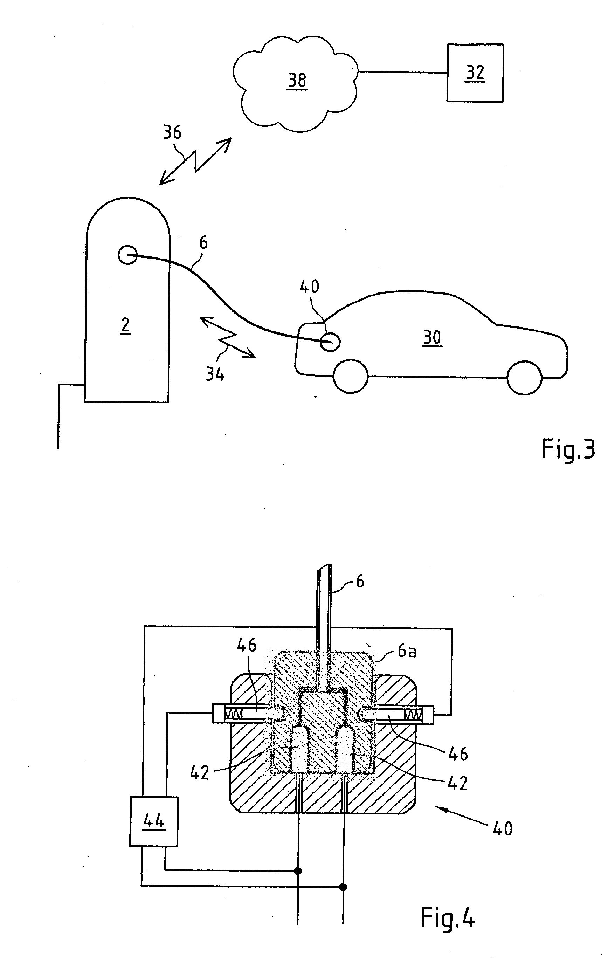

Figur 3 zeigt ein System mit einer Ladestation 2, einem Fahrzeug 30 und einer Zentrale 32. Ferner sind in Figur 3 Funkkommunikationsstrecken 34 und 36 dargestellt. Die Funkkommunikationsstrecke 34 ermöglicht beispielsweise eine Funkkommunikation zwischen der Ladestation 2 bzw. den darin angeordneten Kommunikationsmitteln 16 und dem Fahrzeug 30, beispielsweise über W-lan, Bluetooth, ZigBee, DECT oder dergleichen.

Die Funkkommunikationsstrecke 36 ermöglicht eine Kommunkation zwischen der Ladestation 2 und der Zentrale 32. Hierzu kann die Funkkommunikationsstrecke 36 beispielsweise eine GSM-/UMTS-/LTE-Verbindung sein. Auch kann diese Verbindungsstrecke zumindest teilweise über das Internet 38 erfolgen.

Figur 4 zeigt eine Verriegelungseinrichtung 40, welche in einem Fahrzeug 30 angeordnet sein kann, um ein Ladekabel 6 bzw. einen Ladekabelstecker 6a zu verriegeln. Die Verriegelungseinrichtung 40 verfügt über Kontakte 42, die mit den Adern des Ladekabels 6 verbunden sind. Hier können beispielsweise Kontakte 42 für Energieleitungen und Kontakte 42 für Kommunikationsleitungen vorgesehen sein. Die zwei dargestellten Kontakte 42 sind lediglich beispielhaft zu verstehen.

Ferner ist in der Verriegelungseinrichtung 40 ein Kommunikationsmittel 44 vorgesehen und das Kommunikationsmittel 44 kann ein Kommunikationsprozessor sein, der einerseits eine Kommunikation mit dem Fahrzeug 2 über das Ladekabel 6 aufnehmen kann, oder auch eine Funkkommunikation über die Funkkommunikationsstrecke 34 betreiben kann.

Schließlich sind mechanische Riegel 46 vorgesehen, die elektromotorisch betrieben werden können. Die mechanischen Riegel 46 können in Nuten in dem Stecker 6a eingreifen und so den Stecker 6a in der Verriegelungseinrichtung 40 verriegeln. Auch können die Riegel den Stecker 6a entriegeln, indem sie aus den Nuten des Steckers 6a herausgefahren werden.

Zum Laden des Fahrzeugs 30 fährt ein Benutzer des Fahrzeugs 30 an eine Ladestation 2. Die Ladestation 2 ist vorzugsweise eine Schnellladestation, die mit Gleichspannung lädt. Hierbei kann über das Ladekabel 6 beispielsweise eine Spannung von 400 Volt mit einem Strom von 170 Ampere beaufschlagt werden. Das Ladekabel 6 ist vorzugsweise fest an der Ladestation 2 installiert und verfügt über einen Stecker 6a, der in die Verriegelungseinrichtung 40 des Fahrzeugs 30 eingesteckt werden kann. Der Nutzer steckt den Stecker 6a in die Verriegelungseinrichtung 40 des Fahrzeugs 30 und begibt sich daraufhin zu dem Ein-/Ausgabeterminal 14 der Ladestation 2.

Anschließend wählt der Benutzer über das PIN Pad 20, geleitet durch Anzeigen auf dem Display 22 eine gewünschte Ladedauer, beispielsweise 30 Minuten, aus. Der Benutzer bekommt über das Display 22 die Kosten des Ladevorgangs angezeigt, die er dann bezahlen kann. Hierzu steckt der Benutzer beispielsweise seine EC-Karte in den Kartenleser 24 und gibt über das PIN Pad 20 seinen PIN-Code ein. Nach Bestätigen des Bezahlvorgangs wird über den Belegdrucker 26 ein Zahlungsbeleg 28 ausgedruckt. Zusätzlich oder auf dem Zahlungsbeleg 28 kann ein erster Freischaltcode ausgedruckt werden.

Auch ist es möglich, dass über die Kommunikationsmittel 16 eine Kurznachricht an ein Telefon eines Benutzers übertragen wird, die den Freischaltcode enthält.

Nachdem der Bezahlvorgang abgeschlossen wurde und der Freischaltcode ausgegeben wurde, wird mittels des Mikroprozessors 12 ein Verriegelungssignal über das Ladekabel 6 an das Fahrzeug 30 übertragen. Auch ist eine Übertragung über die Funkkommunikationsstrecke 34 möglich. Sobald die Verriegelungseinrichtung 40 bzw. die Kommunikationsmittel 44 der Verriegelungseinrichtung 40 das Verriegelungssignal empfangen, steuern diese die mechanischen Riegel 46 derart an, dass sie den Stecker 6a verriegeln.

Eine erfolgte Verriegelung des Steckers 6a wird von dem Kommunikationsmittel 44 an die Ladestation 2 entweder über das Ladekabel 6 oder die Funkkommunikationsstrecke 34 übertragen. Die Bestätigung der Verriegelung wird in der Ladestation in dem Mikroprozessor 12 empfangen. Nachdem die Verriegelung bestätigt wurde, steuert der Mikroprozessor 12 die Steuerungsmittel 10 derart an, dass diese über den Laderegler 8 den Ladestrom freigeben. Hierzu wird eine Verbindung zwischen dem Energieversorgungsnetz 4 und dem Ladekabel 6 hergestellt.

Anschließend wird über den Mikroprozessor 12 überwacht, wie lange der Ladevorgang andauert. Ist die Ladedauer abgelaufen, ohne dass eine Benutzereingabe erfolgt ist, wird über den Mikroprozessor 12 ein Entriegelungssignal an das Fahrzeug 30 übertragen. Die Übertragung erfolgt in der gleichen Weise wie die Übertragung des Verriegelungssignals. Das Entriegelungssignal bewirkt, dass der Stecker 6a in der Verriegelungseinrichtung 40 freigegeben wird. Eine Freigabe des Steckers 6a kann optisch an der Ladestation 2 signalisiert werden.

Andererseits ist es möglich, dass der Stecker 6a entweder über die Ladedauer hinaus in der Verriegelungseinrichtung 40 verriegelt bleibt und freigegeben werden muss, oder der Benutzer während der Ladedauer das Ladekabel 6 entriegeln möchte. In diesem Fall nähert sich der Benutzer der Ladestation 2 und gibt über das PIN Pad 20 einen zweiten Freischaltcode ein. Vorzugsweise hat der Benutzer den Beleg 28 behalten und kann somit den zuvor ausgegebenen ersten Freischaltcode ablesen und eingeben. Der eingegebene Freischaltcode wird von dem Ein-/Ausgabeterminal 14 an den Mikroprozessor 12 übermittelt. In dem Mikroprozessor 12 ist der zuvor ausgegebene erste Freischaltcode gespeichert und wird mit dem vom Benutzer eingegebenen zweiten Freischaltcode verglichen. Bei einem positiven Vergleichsergebnis übermittelt der Mikroprozessor 12 ein Freigabesignal an das Fahrzeug 30, woraufhin der Ladekabelstecker 6a aus der Verriegelungsvorrichtung 40 entriegelt wird und entnommen werden kann.

Auch ist es möglich, dass der erste Freischaltcode nicht in der Ladestation 2 generiert wird, sondern von einer Zentrale 32 empfangen wird. Hierzu kann nach Abschluss des Bezahlvorgangs die Ladestation 2 über die Funkkommunikationsstrecke 36 ein Anforderungssignal an die Zentrale 32 schicken. Die Zentrale 32 antwortet mit einem ersten Freischaltcode, der von den Kommunikationsmitteln 16 in der Ladestation 2 empfangen wird und über das Display 22 ausgegeben werden kann.

Mit Hilfe des gezeigten Verfahrens kann ein Ladevorgang vor mutwilliger Unterbrechung geschützt werden. Eine bezahlte Ladedauer kann durch die Ladestation garantiert werden, da ein Ladekabel nicht mehr ohne weiteres aus dem Fahrzeug entfernt werden kann, solange die bezahlte Ladedauer nicht abgelaufen ist oder der Berechtigte den Ladevorgang beendet hat.

## Patentansprüche

1. Verfahren zur Sicherung eines Ladevorgangs eines Fahrzeugs (30) an einer Ladestation (2) umfassend,
a0) ladestationsseitiges Bestimmen einer Ladedauer und/oder ladestationsseitiges Abwickeln eines Bezahlvorgangs,
a) ladestationsseitiges Ausgeben eines zufälligen oder pseudozufälligen ersten Freischaltcodes an einen Benutzer,
al) ladestationsseitiges Übermitteln eines eine Verriegelung eines Ladekabels (6) an dem Fahrzeug (30) bewirkendes Verriegelungssignal an das Fahrzeug (30),
b) ladestationsseitiges Freigeben des Ladestroms,
c) ladestationsseitiges Empfangen eines von einem Benutzer eingegebenen zweiten Freischaltcodes,
d) ladestationsseitiges Vergleichen des ersten Freischaltcodes mit dem zweiten Freischaltcode,
e) ladestationsseitiges Unterbrechen des Ladestroms bei einem positiven Vergleichsergebnis,
e1) ladestationsseitiges Übermitteln eines eine Entriegelung des Ladekabels (6) an dem Fahrzeug (30) bewirkendes Entriegelungssignal an das Fahrzeug (30), und
f1) fahrzeugseitiges Entriegeln des Ladekabels (6) nach Ablauf der Ladedauer unabhängig von der Eingabe des zweiten Freigabecodes.

2. Verfahren nach Anspruch 1, **dadurch gekennzeichnet, dass** die Schritte a) bis b) zu Beginn eines Ladevorgangs durchgeführt werden und dass die Schritte c) bis f1) am Ende des Ladevorganges durchgeführt werden.

3. Verwahren nach Anspruch 1, **dadurch gekennzeichnet, dass** der erste Freischaltcode in der Ladestation (2) erzeugt wird und von der Ladestation über einen Belegdrucker (26), ein Display oder eine elektronische Nachricht an den Nutzer ausgegeben wird.

4. Verfahren nach Anspruch 1, **dadurch gekennzeichnet, dass** der zweite Freischaltcode ladestationsseitig oder fahrzeugseitig vom Benutzer eingegeben wird.

5. Verfahren nach Anspruch 1, **dadurch gekennzeichnet, dass** die Kommunikation zwischen der Ladestation (2) und dem Fahrzeug (30) über das Ladekabel (6), vorzugsweise unter Verwendung eines CHADEMO Protokolls oder unter Verwindung eines Power-Line-Communication (PLC) Protokolls, erfolgt.

6. Verfahren nach Anspruch 1, **dadurch gekennzeichnet, dass** der erste Freischaltcode in der Ladestation (2) erzeugt wird oder in der Ladestation (2) von einer Zentrale (32) empfangen wird.

7. Ladestation für Fahrzeuge (30), insbesondere Elektrofahrzeuge mit
- Mitteln zum Bestimmen einer Ladedauer und/oder Abwickeln eines Bezahlvorgangs;
- Ausgabemitteln (26) eingerichtet zum Ausgeben eines zufälligen oder pseudozufälligen ersten Freischaltcodes an einen Benutzer,
- Steuerungsmitteln (10) eingerichtet zum Freigeben des Ladestroms und zum Übermitteln eines eine Verriegelung eines Ladekabels (6) an dem Fahrzeug (30) bewirkenden Verriegelungssignal an das Fahrzeug (30),
- Empfangsmitteln (20) eingerichtet zum Empfangen eines von einem Benutzer eingegebenen zweiten Freischaltcodes,
- Vergleichsmitteln (12) eingerichtet zum Vergleichen des ersten Freischaltcodes mit dem zweiten Freischaltcode,
- wobei die Vergleichsmittel (12) in Wirkverbindung mit den Steuerungsmitteln (10) sind, derart, dass bei einem positiven Vergleichsergebnis die Steuerungsmittel den Ladestrom unterbrechen, wobei
- die Steuerungsmitteln (10) eingerichtet sind zum Übermitteln eines eine Entriegelung des Ladekabels (6) an dem Fahrzeug (30) bewirkenden Entriegelungssignals an das Fahrzeug (30), derart dass fahrzeugseitig das Ladekabel (6) nach Ablauf der Ladedauer unabhängig von der Eingabe des zweiten Freigabecodes entriegelt ist.

## Claims

1. Method for securing a charging process of a vehicle at a charging station comprising
a0) determining a charging time and/or carrying out a payment process on the charging station side,
a) outputting a random or pseudorandom first release code to a user on the charging-station side,
a1) sending to the vehicle an interlocking signal that brings about an interlocking of a charging cable to the vehicle from the charging station side,
b) releasing the charging current on the charging-station side,
c) receiving a second release code that is input by a user on the charging-station side
d) comparing the first release code with the second release code on the charging-station side, and
e) interrupting the charging current on the charging-station side in the event of a positive comparison result,
e1) sending to the vehicle an unlocking signal that brings about the unlocking of the charging cable from the vehicle from the charging station side,
f1) unlocking upon expiry of the charging time independently of the input of the second release code the charging cable on the vehicle side.

2. Method according to claim 1, **characterised in that** steps a) to b) are performed at the start of a charging process and that steps c) to f1) are performed at the end of the charging process.

3. Method according to claim 1, **characterised in that** the first release code is generated in the charging station and output by the charging station via a receipt printer, a display or an electronic message to the user.

4. Method according to claim 1, **characterised in that** the second release code is input on the charging-station side or the vehicle side by the user.

5. Method according to claim 1, **characterised in that** the communication between charging station and the vehicle takes place via the charging cable, preferably using a CHADEMO protocol or using a Power-Line-Communication (PLC) protocol.

6. Method according to claim 1, **characterised in that** the first release code is generated in the charging station or is received in the charging station from a control centre.

7. Charging station for vehicles, in particular electric vehicles, having
- means configured for determining a charging time and/or of for processing payment,
- output means configured to output a random or pseudorandom first release code to a user,
- control means configured to release the charging current and for transferring to the vehicle an interlocking signal that brings about an interlocking of a charging cable to the vehicle,
- reception means configured to receive a second release code input by a user,
- comparison means configured to compare the first release code with the second release code,
- wherein the comparison means have an operative connection with the control means such that in the event of a positive comparison result the control means interrupt the charging current, and
- wherein the control means are arranged for transferring to the vehicle an unlocking signal that brings about the unlocking of the charging cable from the vehicle, such that upon expiry of the charging time independently of the input of the second release code the charging cable is unlocked on the vehicle side.

## Revendications

1. Procédé de sécurisation d'un processus de charge d'un véhicule électrique (30) dans une station de charge (2), lequel procédé comprend les étapes suivantes :
a0) détermination, côté station de charge, d'une durée de charge et / ou déroulement, côté station de charge, d'un processus de paiement,
a) délivrance, côté station de charge, d'un premier code aléatoire ou pseudo aléatoire de déconnexion à un utilisateur,
a1) transmission au véhicule (30), côté station de charge, d'un signal de verrouillage qui provoque un verrouillage d'un câble de charge (6) sur le véhicule (30),
b) libération du courant de charge, côté station de charge,
c) réception, côté station de charge, d'un deuxième code de déconnexion, introduit par un utilisateur,
d) comparaison, côté station de charge, du premier code de déconnexion avec le deuxième code de déconnexion,
e) interruption du courant de charge, côté station de charge, en cas de résultat positif de la comparaison,
e1) transmission au véhicule électrique (30), côté station de charge, d'un signal de déverrouillage provoquant un déverrouillage du câble de charge (6) sur le véhicule électrique (30), et
f1) déverrouillage du câble de charge (6), côté véhicule, après l'écoulement de la durée de charge, indépendamment de l'introduction du deuxième code de commutation libre.

2. Procédé selon la revendication 1, **caractérisé en ce que** les étapes a) à b) sont exécutées au début d'un processus de charge et q u e les étapes c) à f1) sont exécutées à la fin du processus de charge.

3. Procédé selon la revendication 1, **caractérisé en ce que** le premier code de déconnexion est généré dans la station de charge (2) et est délivré à l'utilisateur par la station de charge, au moyen d'une imprimante de pièces de comptabilité (26), d'un display ou d'un message électronique.

4. Procédé selon la revendication 1, **caractérisé en ce que** le deuxième code de déconnexion est introduit côté station de charge ou par l'utilisateur côté véhicule.

5. Procédé selon la revendication 1, **caractérisé en ce que** la communication entre la station de charge (2) et le véhicule (30) est effectuée par l'intermédiaire du câble de charge (6), en utilisant, de préférence de préférence un protocole CHADEMO ou en utilisant un protocole de communication power-Line (PLC).

6. Procédé selon la revendication 1, **caractérisé en ce que** le premier code de déconnexion est généré dans la station de charge (2) ou est reçu dans la station de charge (2) d'une centrale (32).

7. Station de charge pour véhicules (30), en particulier pour véhicules électriques, avec
- des moyens de détermination d'une durée de charge et / ou de déroulement d'un processus de paiement ;
- des moyens de sortie (26) pour délivrer à un utilisateur un code de déconnexion aléatoire ou pseudo aléatoire ;
- des moyens de commande (10) qui sont aménagés pour la libération d'un courant de charge et pour transmettre au véhicule (30) un signal de verrouillage qui provoque un verrouillage d'un câble de charge (6) sur le véhicule (30),
- des moyens de réception (20) qui sont aménagés pour la réception d'un deuxième code déconnexion, introduit par un utilisateur,
- des moyens de comparaison (12) qui sont aménagés pour établir une comparaison entre le premier code de déconnexion et le deuxième code de déconnexion,
- sachant que les moyens de comparaison (12) sont en coopération active avec les moyens de commande (10) de telle manière que, lors d'un résultat de comparaison positif, les moyens de commande interrompent le courant de charge,
- sachant que les moyens de commande (10) sont aménagés pour transmettre au véhicule (30) un signal de déverrouillage qui provoque un déverrouillage d'un câble de charge (6) sur le véhicule (30), de telle manière que, côté véhicule, le câble de charge (6) soit déverrouillé après l'écoulement de la durée de charge, indépendamment de l'introduction du deuxième code de déconnexion.
